# EUROPEAN PATENT SPECIFICATION

(11) **EP 4 521 961 B1**
(45) Date of publication and mention of the grant of the patent: **20.08.2025**
(21) Application number: 23726470.0
(22) Date of filing: 10.05.2023
(51) Int. Cl.: A23P 20/12

(54) **COATING OF FOOD PRODUCTS WITH A PARTICULATE COATING MATERIAL**
ÜBERZIEHEN VON LEBENSMITTELPRODUKTEN MIT PARTIKELFÖRMIGEN ÜBERZIEHMATERIALIEN
ENROBAGE DE DENREES ALIMENTAIRES AVEC DES MATERIAUX DE REVETEMENT PARTICULAIRES

(30) Priority: 13.05.2022 NL 2031852
(43) Date of publication of application: 19.03.2025
(73) Proprietor: Marel Further Processing B.V., 5831 AV Boxmeer (NL)
(72) Inventor: MEULENDIJKS, Johannes Martinus, 5831 AV BOXMEER (NL); VAN DER STRAATEN, Wilhelmus Johannes Jacobus Maria, 5831 AV BOXMEER (NL); VAN ZOELEN, Martinus Johannes Willebrordus, 5831 AV BOXMEER (NL); KUIJPERS, Mathias Marcellus, 5831 AV BOXMEER (NL)
(74) Representative: EP&C
(86) International application number: PCT/EP2023/062396
(87) International publication number: WO 2023/217846

(56) References cited:
- EP-A1- 1 226 763
- WO-A1-2009/017776
- US-A- 2 865 766
- US-A- 3 703 382
- US-A1- 2008 283 366

## Description

The present invention relates to a coating machine adapted to coat food products with a particulate coating material and to a method of coating. The device comprises a food products conveyor assembly adapted to receive food products to be coated at an inlet of the machine and to discharge coated food products at an outlet of the machine in a food product transport direction. A coating device is arranged between the inlet and the outlet of the machine and is adapted to be supplied with particulate coating material and to subject the food products to a coating treatment wherein some of the particulate coating material adheres to the food products. An upper particulate coating material supply unit is mounted above the food products conveyor, wherein the upper particulate coating material supply unit comprises an upper fill opening for filling the upper particulate coating material supply unit with particulate coating material and a lower particulate coating material supply opening to supply particulate coating material onto the food products conveyor. An excess coating material separation station is configured to cause excess coating material to be separated from said coated food products in order to recover said excess coating material for re-use.

The machine has an excess coating material recovery conveyor comprising:
- a recovered excess coating material bed support adapted to receive thereon at a reception location said recovered excess coating material from said separation station to form a recovered excess coating material bed of said separated excess coating material on said recovered excess coating material bed support,
- a recovery conveyor run above said recovered excess coating material bed support and movable relative to said bed support and configured to convey said excess coating material bed over said recovered excess coating material bed support,

The machine has a particulate coating material elevator device comprising a plurality of pockets adapted to receive a portion of said excess coating material from said recovery conveyor and to supply said excess coating material to the upper particulate coating material supply unit for re-use of the particulate coating material.

In particular, the invention relates to an inline coating machine which is designed to be used in an industrial-scale food-processing system.

Food product coating machines for coating with a particulate coating material are well-known from the prior art and widely available in the field. When handling particulate coating material, inevitably a particle size distribution will be present in the coating material, comprising relatively coarse and relatively fine particles. In general, it is desired in this type of devices to have a homogenous distribution of particle sizes such that food products are coated evenly. However, an operator of these devices may also desire other distributions of particle sizes, for example a different distribution between the top and bottom of a food product or vice versa.

A coating device for particulate coating material as outlined above is for example described in European patent application EP3727041. This device focusses on the control of the distribution of particle sizes, in particular the control of particle sizes between the lower and upper coating supply.

Another example of such device is described in EP1591023, which describes a known in-line coating machine comprises an elevator wheel fill assembly arranged along the lower recovery conveyor run downstream of the reception location and configured to fill pockets of the revolving particulate coating material elevator wheel with recovered excess coating material.

Prior art document US2865766 describes an apparatus for coating generally flat fragile articles with a liquid adhesive and an external layer of dry comminuted material. The apparatus comprises a forward hopper compartment having transverse side walls which slope toward the center and side walls which slope inwardly -in a transverse direction. The apparatus further comprises a rearward hopper compartment, divided longitudinally by downwardly sloping sides. The crumbs which follow the incline of a sloping panel are directed to the left-hand trough and those following the other panel are directed to the right-hand trough.

This type of coating machines apply a particulate coating material elevator device, such as an elevator wheel, comprising pockets to collect re-use particulate coating material and elevate that towards an upper particulate coating material supply unit mounted above the food products conveyor. As this elevator device in operation is typically in a continuous motion and because that elevating motion typically also implies a horizontal velocity component at the location of the elevation device where the coating material is deposited into the upper particulate coating material supply unit, the particulate coating material may be dehomogenized during its deposit into the upper particulate coating material supply unit due to differences in momentum and/or friction effects for the different size fractions of the particulate coating material. This dehomogenization effect of the particulate coating material size distribution in the upper particulate coating material supply unit is even more significant for wider machine/process widths, at larger velocities of the elevation device and with a larger difference between small and larger particles, such as typically is the case in coating applications where very coarse and/or large particles such as cornflake crumbs are applied onto food products.

It is therefore an aim of the present invention to mitigate the above dehomogenization of the size fractions of the particulate coating.

The invention relates to a coating machine adapted to coat food products with a particulate coating material according to the claim 1.

The first and second slide plates are mounted at an inclination, wherein the direction of inclination of the first slide plate is opposite to the direction of inclination of the second slide plate, such that particulate coating material that is dropped onto the first slide plate at a first lateral side of the upper particulate coating material supply unit slides down towards a distal opposite second lateral side and particulate coating material that is dropped onto the second slide plate at the second lateral side of the upper particulate coating material supply unit slides down towards the distal opposite first lateral side.

By providing such setup of slide plates inside the upper particulate coating material supply unit the dehomogenisation or segregation of the size fractions inside the upper particulate coating material supply unit is mitigated or at least reduced. A size fraction of the particulate coating material that falls further than another size fraction, for example due to a difference in momentum and/or air friction effects, shifts back to the opposite lateral side of the upper particulate coating material supply unit, where it mixes with the size fraction that was deposited on that side of the upper particulate coating material supply unit directly from the elevation device.

The first and second slide plate are mounted inside the upper particulate coating material supply unit and arranged under the deposit area where the elevator device deposits particulate coating material. The first and second slide plates are mounted at an inclination. The inclination is inclined with respect to the horizon, or more precisely, inclined such that gravitational forces pull the particulate coating material via the inclination downward to the other lateral side of the upper particulate coating material supply unit. The direction of inclination of the first slide plate is opposite to the direction of inclination of the second slide plate, such that particulate coating material that is dropped onto the first slide plate at a first lateral side of the upper particulate coating material supply unit slides down towards a distal opposite second lateral side and vice versa. As a result coarser particles falling on the first slide plate are moved e.g. to the left side, while finer particles falling on the second slide plate are moved to the right side or vice versa depending on the configuration. This results in a more homogenous distribution of particulate coating particles.

In a practical embodiment, the first and second slide plates are each perpendicular to the food transport direction of the machine.

In an embodiment according to the present invention, the plurality of pockets of the elevator device are configured in a variety of pocket configurations, wherein the pocket configuration is defined by at least the shape and/or angle of the pocket with respect to the elevator device, wherein each of the variety of pocket configurations initiate the release of particulate coating material at a different lateral location above the upper fill opening for filling the upper particulate coating material supply unit.

The pocket is mounted to the elevation device or may be integral part thereof.

It will be appreciated that the angle of the open end at which the particulate coating material enters the pocket at the lower position of the elevation device and leaves the pocket at its upper position above the upper fill opening for filling the upper particulate coating material supply unit is one of the determining factors for the timing at which the particulate coating material slides out of the pocket into the supply unit. The angle may be configured by the angle at which the whole pocket is mounted to the elevation device and/or be defined by the angle of an end plate at the opening of the pocket. A steeper angle may retain the coating material longer than a shallower angle and a small curved edge may for example postpone the deposit of the coating material slightly over a completely flat end plate.

By varying the configuration in terms of angle and/or shape of subsequent pockets, the timing and therefore the (angular) position of the deposit of the particulate coating material varies over subsequent pockets and therefore the amounts and size distribution of the coating material onto the slide plates also varies with each variation of pocket configuration, contributing to the lateral homogenisation inside the upper particulate coating material supply unit.

In an embodiment according to the present invention, the particulate coating material elevator device comprises an elevator wheel mounted rotationally at least partially around the food product conveyor belt such that the elevator wheel can collect re-use particulate material at its lower angular position and release its contents at its upper angular position above the upper particulate coating material supply unit.

In an embodiment according to the present invention, the particulate coating material elevator device comprises at least three different pocket configurations. By releasing the contents of the pockets at three individual drop locations above the upper particulate coating material supply unit, the variation of sizes falling on the slide plates is able to homogenize the size distribution of the resulting mount of coating material. A pocket configuration is defined by any specific angle and/or shape or other property that influences the release timing and/or position above the upper particulate coating material supply unit.

In a further embodiment according to the present invention, the particulate coating material elevator device comprises at least two alternating unique groups of pocket configurations, wherein each group of pocket configurations comprises at least five, preferably eight pocket configurations. It has been found advantageous for the distribution of the coating particle sizes over the width of the upper supply unit to provide at least two unique groups of pocket configurations that alternate around the elevation device, in particular in case of an elevator wheel. As an example of a group of five pocket configurations from three unique pocket configurations, a group may be described as A B C B A or A A C B B, etc wherein each letter (A, B, C) would represent a pocket configuration with a unique release point over the upper supply unit. As an example of a group of eight out of 5 unique pocket configurations (A, B, C, D, E), a group may be described as D B A D C A E B.

In an embodiment according to the present invention, the pocket configuration as defined by at least the shape and/or angle varies over the width of the pocket such that the timing of the depositing of particulate coating material into the upper particulate coating material supply unit varies in the food product transport direction. The shape and/or angle of each pocket may vary over its length, i.e. over the width of the elevator device. Thereby a single pocket may release its contents at different (angular) positions above the upper particulate coating material supply unit. By this setup, the variety of the distribution onto the slide plates increases which contributes to a more homogenous end distribution. The configuration of the pocket may vary in discrete steps of fluctuate continuously over its length and width. The variations may be adapted in synchronization with the location of the slide plates.

In a further embodiment according to the present invention, the pocket configuration as defined by at least the shape and/or angle varies over the width of the pocket in at least two, preferably three discrete lateral regions of the pocket, wherein each subsequent lateral portion of the pocket is configured to have a different timing of the depositing of particulate coating material into the upper fill opening for filling the upper particulate coating material supply unit than a neighbouring lateral region. The variations may be adapted in synchronization or alignment with the location of the slide plates.

In another further embodiment according to the present invention, the pocket configuration as defined by at least the shape and/or angle varies in a continuously fluctuating shape with a fluctuating deposit timing of particulate coating material into the upper fill opening for filling the upper particulate coating material supply unit.

In an embodiment according to the present invention, the upper particulate coating material supply unit comprises a further third slide plate that is shaped or configured to receive particulate coating material substantially from the whole lateral width of the upper particulate coating material supply unit and to have the received particulate coating material flow towards the center of the upper particulate coating material supply unit. In cooperation between the locations of the slide plates and the release locations of the pockets, the control of the size distribution can be influenced in order to render a more homogenous end mount of particulate coating material inside the supply unit, such that the coating material can be provided towards the food products to be coated in a homogenous fashion, both in terms of top and bottom but also in a lateral direction.

In an embodiment according to the present invention, the pockets are configured such that particulate coating material is deposited onto all slide plates in the upper particulate coating material supply unit. In cooperation between the locations of the slide plates and the release locations of the pockets, the control of the size distribution can be influenced in order to render a more homogenous end mount of particulate coating material inside the supply unit, such that the coating material can be provided towards the food products to be coated in a homogenous fashion, both in terms of top and bottom but also in a lateral direction.

In an embodiment according to the present invention, the upper particulate coating material supply unit comprises a ramp, e.g. an inclined bottom of a hopper of the unit, to guide the particulate coating material towards the lower particulate coating material supply opening. In an embodiment, an agitator is mounted adjacent the ramp such that the particulate coating material that is in operation guided towards the supply opening is agitated. When the distribution of different sizes of particulate coating material slides down a ramp towards the lower supply opening toward the food products, there may occur a further dehomogenization due to smaller particles sliding down the stack more easily than larger examples. By applying an agitator in the slide path of the stack of coating material, e.g. implemented as one or more rods mounted on both sides of the frame in the slide path, the stack of coating material is agitated and therefore homogenized more optimally before reaching the food product conveyor.

In an embodiment according to the present invention, a holed sieve plate is mounted at the lower particulate coating material supply opening, for example wherein the sieve plate comprises lateral lines of holes and wherein the hole size of the holes increase from smallest at the supply opening to larger at the distal end of the sieve plate. In particular in applications where food products need to be coated with a large variety of coating sizes, such as cornflake crumbs and smaller crumbs, it is important that the larger crumbs are adhered to the product first, before the smaller crumbs fill up the remaining holes. In case smaller crumbs adhere to the product first, the chance increases that larger flakes or crumbs do not adhere to the food product, which may result in a loose coating, which may result in a less optimal end product, and/or in case the product is e.g. deep fried, it may result in releasing the larger coating material in the frying oil, which results in oil filtering issues and potentially health issues due to the reduction of the quality of the oil. Therefore, the sieve plate keeps the larger fraction of the coating material on the sieve plate while the smaller particles pass through the plate. Because the food products are conveyed from the distal end (with the largest holes) towards the supply exit side (with the smallest holes), the larger flakes or coarse crumbs will adhere first before the vacancies are filled with the smaller crumbs.

In an embodiment according to the present invention, pockets are configured such that the pockets transition to the particulate coating material elevator device in a substantially perpendicular fashion. In food industry it is of the utmost importance that construction elements such as metal plates that form the pockets inside the elevator device, do not comprise sharp angles, as these sharp angles may absorb coating material that will not easily release when cleaning the machine. This may cause food safety issues for users. As the angle of the pockets vary over the circumference of the elevator device in case of an elevator wheel, the risk of these sharp angles is real. Therefore the pockets are mounted to the elevator device by means of a construction element, such as a bend piece of the plate defining the pockets bottom plate, whereas the bend is such that the connection between the pocket and the elevator device does not comprise sharp angles which can trap food particles, and preferably a shallow angle, such as a perpendicular connection between pocket and elevator device.

In an embodiment according to the present invention, the distance between the inflow opening of the elevator wheel pockets are distributed in a substantially equidistant fashion.

Although the angles and shapes of the pockets may vary, the distance between the end plates of the pockets, i.e. the edges at which the coating material enters the pocket and at which it is release again, are distributed substantially equidistant, i.e. with equal distances between subsequent pockets such that the filling of the pockets at the lower (angular) position of the elevator device fills each pocket substantially equally for a given supply of coating material.

In an embodiment according to the present invention, the supply direction of particulate coating material at the lower particulate coating material supply opening is opposite the food product transport direction. The dynamics of the flow of particulate coating material at the location where the coating is applied to the food products may be different if it is in the same direction as the food product conveyor direction. The homogenous distribution is better upheld when the direction is opposite the food conveying direction.

In an embodiment according to the present invention, the device further comprises a fill chute for supplying fresh particulate coating material which is combined with the recovered excess coating material from the upper particulate coating material supply unit before supplying the coating material to the food product.

The invention also relates to a method for coating food products, wherein use is made of a coating machine as described herein.

Reference is made to details and advantages in the description of corresponding elements and functionality of the food processing line in the description here above. Further scope of applicability of the present invention will become apparent from the detailed description given hereinafter. However, it should be understood that the detailed description and specific examples, while indicating embodiments of the invention, are given by way of illustration only, since various changes and modifications within the scope of the invention as defined in the claims will become apparent to those skilled in the art from this detailed description.

The invention will be explained in more detail with reference to the attached drawings which show a practical embodiment of the invention, but should not be regarded as being limiting, in which:
Fig. 1 shows schematically in side view and cross section an example of an in-line coating machine according to the invention;
Fig. 2 shows on a larger scale a part of the machine of figure 1;
Fig. 3 shows a perspective view onto the elevator device fill assembly and segregation enhancing assembly of the machine of figure 1;
Fig. 4 shows a perspective view onto the top coating device of the machine of figure 1;
Fig. 5 shows an alternative embodiment of the machine of figure 1, having segregation enhancing assembly acting on the excess coating bed support;
Fig. 6 shows an alternative embodiment of the machine of figure 1, having an adjustable bypass opening device;
Fig. 7 shows a schematic perspective view of the upper particulate coating material supply unit and an elevator device according to the invention;
Fig. 8 shows a schematic side view of the upper particulate coating material supply unit according to the invention;
Fig. 9 shows a schematic perspective view of the upper particulate coating material supply unit;
Fig. 10 shows a schematic perspective view with a partial cut out of a first alternative of the elevator device according to the invention;
Fig. 11 shows a schematic cross sectional view of the elevator device of Figure 10;
Fig. 12 shows a schematic perspective view with a partial cut out of a second alternative of the elevator device according to the invention;
Figs. 13 a-f show pocket configurations of the elevator device of Figure 12;
Fig. 14 shows a schematic perspective view with a partial cut out of a third alternative of the elevator device according to the invention;
Figs. 15 a-f show pocket configurations of the elevator device of Figure 14;
Fig. 16 shows a schematic perspective view of a holed sieve plate according to the invention;
Fig. 17 shows a schematic perspective view of the upper particulate coating material supply unit with a partial cut out.

The present invention will now be described with reference to the accompanying drawings, wherein the same reference numerals have been used to identify the same or similar elements throughout the several views.

It is noted that the drawings are schematic, not necessarily to scale and that details that are not required for understanding the present invention may have been omitted. The terms "upward", "downward", "below", "above", and the like relate to the embodiments as oriented in the drawings, unless otherwise specified. Further, elements that are at least substantially identical or that perform an at least substantially identical function are denoted by the same numeral, where helpful individualised with alphabetic suffixes.

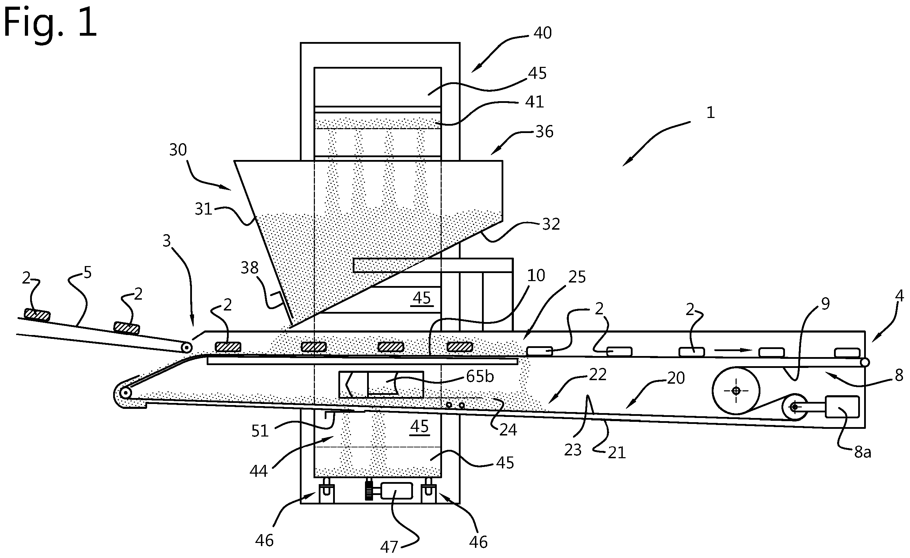

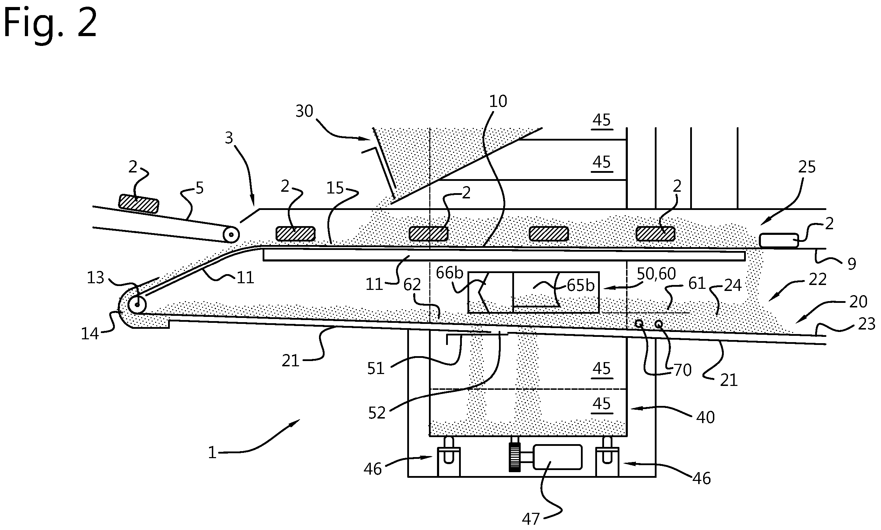

With reference to figures 1 - 4 an exemplary embodiment of an in-line coating machine according to the invention will be discussed. The machine 1 is adapted to coat food products 2 with a particulate coating material, such as breading crumb material.

The coating machine 1 generally has a food products conveyor assembly that is adapted to receive the food products 2 to be coated at an inlet 3 of the machine and to discharge coated food products at an outlet 4 of the machine. For example, the food products have already passed a batter machine and/or a pre-dusting machine. Here the products 2 are fed to the inlet 3 by a conveyor 5, e.g. of such other machine.

In the depicted embodiment the machine has a single or main belt conveyor 8 with a single endless belt 9, preferably with a mesh belt, e.g. a (stainless steel) wire mesh belt as is rather common in the art. A motor drive 8a, e.g. of variable speed, is provided to move the belt 9.

An upper run of the belt 9 here forms the food products conveyor assembly of the machine 1 and also forms a bottom coating material bed advancing conveyor run 10 of the machine. Underneath, a portion of, the length conveyor run 10 the machine has an associated bottom coating material bed support 11.

In operation of the machine the bottom coating material bed support 11 supports thereon a bottom coating material bed 15.

The advancing conveyor run 10 conveys this bottom coating material bed 15 over the bottom coating material bed support 11. As shown here, the bottom coating material bed 15 receives food products to be coated in proximity of the inlet 3 of the machine 1.

The machine also has a top coating device 30 that is supplied with particulate coating material and discharges particulate coating material from above onto the food products 2 received by the bottom coating material bed 15 and conveyed by the bottom coating material bed advancing conveyor run 10.

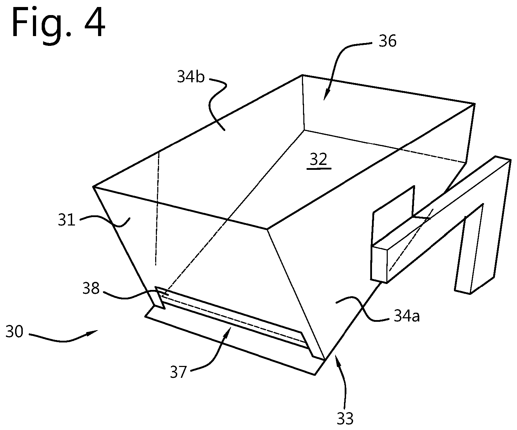

As shown in figure 4, the top coating device may comprises a upper particulate coating material supply unit 30 having a front wall 31 facing counter to the direction of transport of food products, a sloping bottom wall 32 forming a ramp and adjoining the front wall at a lower corner portion 33 of the upper particulate coating material supply unit and sloping upwards from said lower corner portion in direction of conveyance of food products, as well as lateral upper particulate coating material supply unit walls 34a, b that delimit with said front wall and sloping bottom wall the upper particulate coating material supply unit. The upper particulate coating material supply unit is open at a top 36 thereof so as to receive therein particulate coating material gravity fed from the excess coating material elevator device 40, here dropped directly from the device 40 into the upper particulate coating material supply unit.

The upper particulate coating material supply unit 30 has an outlet opening 37 in the lower corner region 33 from which the coating material is discharged, here an outlet opening 37 controlled by an outlet gate 38.

As is common in the field, operation of the in -line coating machine 1 causes some of the particulate coating material to adhere to the food products 2.

Downstream of the one or more coating devices, here downstream of the bed support 11 an excess coating material separation station 25 is provided which is configured to cause excess coating material to be separated from the coated food products in order to recover the excess coating material for re-use. In the very simple and practical embodiment depicted, the station 25 is no more than the trailing end of the support bed 11 which causes excess material to drop through the mesh belt 9 whilst the coated products 2 remain on the belt. In another embodiment, e.g. in addition to the trailing end of the bed 11, one or more blowers, air-knives, etc. may be provided to cause or enhance removal of excess coating particles, e.g. blowing said excess down through the mesh belt 9. In embodiments separation of excess material is enhanced by having a belt agitator device at station 25, so that excess material is dislodged from the belt and/or the food products.

As depicted here the belt 9 also forms an excess coating material recovery conveyor 20 of the machine.

Here conveyor 20 comprises a recovered excess coating material bed support 21 adapted to receive thereon at a reception location 22, here vertically below the station 25, recovered excess coating material from the separation station 25 and forming a recovered excess coating material bed 24 of separated excess coating material on said recovered excess coating material bed support 21. A recovery conveyor run 23 of the belt 9, effectively the lower run of the belt 9, extends and moves above the recovered excess coating material bed support 21 and relative to the bed support 21. In operation this run 23 conveys the excess coating material bed over the recovered excess coating material bed support 21.

As preferred the belt 9 extends just above the beds 11, 21, or, as preferred, the belt 9 rests on each of said beds and slides over said beds. This achieves a good transport of the coating material bed.

As depicted the machine 1 comprises a particulate coating material elevator wheel 40 that is adapted to supply a portion of the excess coating material to the top coating device 30 for re-use.

The machine further comprises an elevator wheel fill assembly 50 arranged along the lower recovery conveyor run 23 downstream of the reception location 22 and configured to fill pockets of the revolving particulate coating material elevator wheel with recovered excess coating material.

As can be seen the exemplary machine 1 is embodied to transfer recovered excess coating material remaining in the excess coating material bed 15 downstream of the elevator wheel fill assembly to the bottom coating material bed advancing conveyor run 11. In this embodiment a front roller 13 guiding the belt 9 is partly surrounded by a curved deflector 14 that forms an extension of bed 21 so that excess coating material is moved around the roller 13 onto an inclined ascending portion of the bed support 11 that adjoins a substantially horizontal portion of the bed support 11.

The elevator wheel 40 comprises:
- an annular wheel body 41 adapted to revolve about an axis of rotation and having a central opening;
- a circumferential array of pockets 45 in said annular wheel body, the pockets being open towards the central opening of the elevator wheel.

The wheel 40 is rotatably supported in a frame of the machine 1, here on rollers 46, to revolve about a substantially horizontal axis of revolution. A motor drive 47, e.g. of variable speed, is provided to drive the wheel 40, in this example a wheel having a circular toothed rack and the drive 47 having a mating pinion.

As depicted the bottom coating material bed advancing conveyor run 10 and the lower recovery conveyor run 23 each extend through the central opening of the annular wheel body, the lower recovery conveyor run 23 below the bottom coating material bed advancing conveyor run 10.

Also depicted is that the elevator wheel 40 passes over the top coating device 30 such that particulate coating material is gravity fed from pockets 45 into the top coating device 30.

The elevator wheel fill assembly 50 comprises:
- one or more adjustable discharge opening devices 51 adapted to control one or more discharge openings 52, here a single elongated slot across the bed support 21, in the recovered excess coating material bed support allowing to discharge at an adjustable rate a portion of the recovered excess coating material bed passing over the one or more discharge openings into pockets 45 of the particulate coating material elevator wheel 40.

Here the gap or effective passage for coating material through the slot 51 is controlled by a slidable gate 52 positioned along the underside of the bed support 21. A manual or power operate controller can be present to move the gate 52 into a desired position. Instead of such a simple embodiment more elaborate designs are also envisaged, e.g. including a drop-through rotary metering valve, etc.

The elevator wheel fill assembly further comprises:
- an adjustable upper layer diverter device 60 that is configured to engage an upper layer 61 of the recovered excess coating material bed passing over the recovered excess coating material bed support 21, with a lower layer 62 passing underneath the diverter device 60, and to divert at least a portion of said upper layer at an adjustable rate into pockets 45 of the particulate coating material elevator wheel 40.

The machine is further provided with a particles segregation enhancing assembly 70 adapted to subject the recovered excess coating material bed passing over the recovered excess coating material bed support 21, upstream of the elevator device fill assembly 50, to a segregation enhancing action in order to cause the upper layer 61 engaged by the upper layer diverter device 60 to be composed of a relative coarse fraction of the particulate coating material and to cause a lower layer 62 of the excess coating material bed to be composed of a relative fine fraction of the particulate coating material.

In the depicted embodiment of figures 1 - 4, the assembly 70 comprises one or more passive members, here rods, that extend above the recovery conveyor run 23. As shown here, the one or more rods 70 may extend across, at least a part of, the width of the excess material bed, so that said excess material is agitated by the passive members enhancing segregation. It is shown here that one or more rods, possibly rectilinear rods, extends horizontally parallel to the conveyor run across the width of the excess material coating bed.

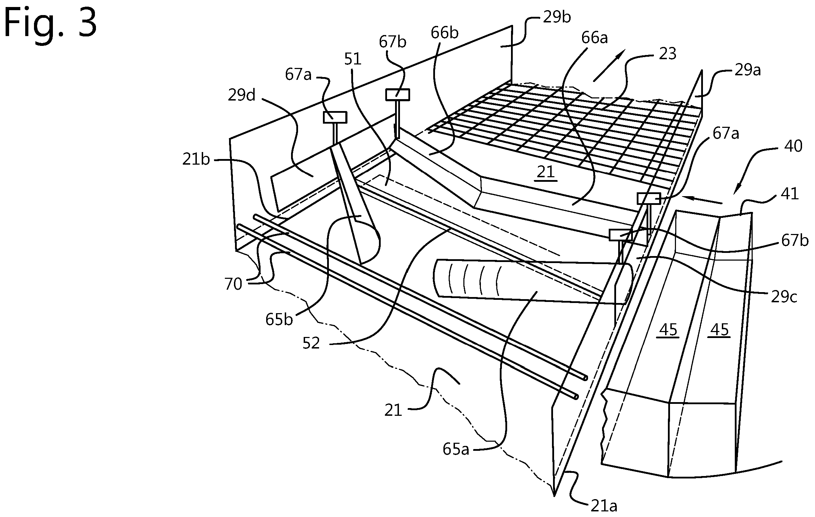

As can be seen in figure 3 the recovered excess coating material bed support 21 has opposed first and second lateral sides 21a, 21b. The upper layer diverter device 60 is adapted to divert a first stream of upper layer excess coating material over the first lateral side 21a and into the particulate coating material elevator device 40 and to divert a second stream of upper layer excess coating material over the second lateral side 21b and into the particulate coating material elevator device 40.

The upper layer diverter device 60 here comprises at least one diverter blade 65a, 65b engaging the upper layer and diverting at least a portion thereof over one of the lateral sides 21a, 21b and into the particulate coating material elevator device 40.

Here the two blades 65a, 65b are arranged in a V with point counter to the direction of conveyance of the recovered excess coating material bed when seen in top view. The blades 65a, 65b may meet at the point or may have, as shown here, spaced apart ends to leave a gap between the ends. For example each of the blades is attached, e.g. movable in height and/or in angular orientation, to a raised lateral housing wall 29a, 29b at each side of the bed 21.

In the depicted embodiment the upper layer diverter device 60 has a first set of one or more diverter blades 65a, b at a first location along the path of the lower recovery run 23 and a second set of one or more diverter blades 66a, b at a second location, downstream of the first location. Here the first set comprises two blades 65a, b arranged in a V with a point counter to the direction of conveyance of the recovered excess coating material bed when seen in top view, and with spaced apart ends to leave a gap in between said ends, and a second set of two blades 66a, b arranged in a V with a point counter to the direction of conveyance of the recovered excess coating material bed when seen in top view, and with ends joined at said point.

It is depicted here that the machine further comprises an angle adjustment mechanisms, integrated with mechanism 67a, adapted to adjust the angular orientation of the upper layer diverter device 60, here blades 65a, b relative to the direction of conveyance of the recovered excess coating material bed when seen in top view. Here each diverter blade 65a, b is pivotable about a vertical rotation axis. For example, the mechanism allows to set the angular orientation thereby covering an adjustable width of the lower recovery run by means of the upper layer diverter device or part thereof.

As shown the machine has a housing with a pair of lateral housing walls 29a, b between which the lower recovery conveyor run 23 travels and raised to extend above said conveyor run 23 and the coating material bed 24.

One or both of these lateral housing walls 29a, b have an opening 29c, d therein through which diverted coating material is passed.

As shown here, preferably, these one or more lateral housing wall openings are located vertically above a lower section of the elevator device 40, e.g. a lower section of an elevator device that comprises a mobile array of pockets 45 adapted to receive therein particulate coating material. For example, the elevator device has a revolving elevator wheel, arranged such that diverted coating material drops directly into pockets of the wheel.

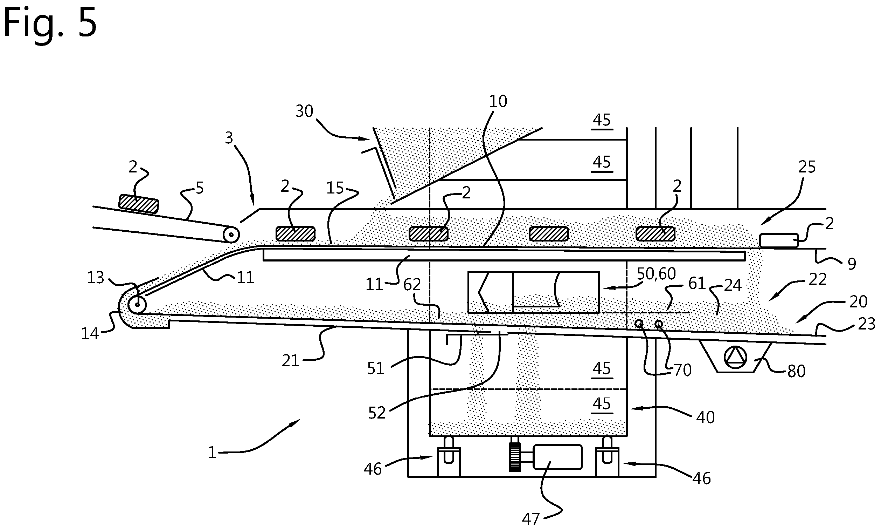

In figure 5, in order to enhance the segregation into layers of the excess material bed 24, the particles segregation enhancing assembly 70 comprises a vibratory device 80 acting on the recovered excess coating material bed support 21, e.g. on a portion thereof, thereby inducing or enhancing particle segregation ahead of the assembly 50. For example, the device 80 is adjustable to achieve adjustable intensity of the vibration to which the bed is subjected, for example an excenter mass is rotatable at an adjustable speed to induce vibrations to a (part of) the bed 21.

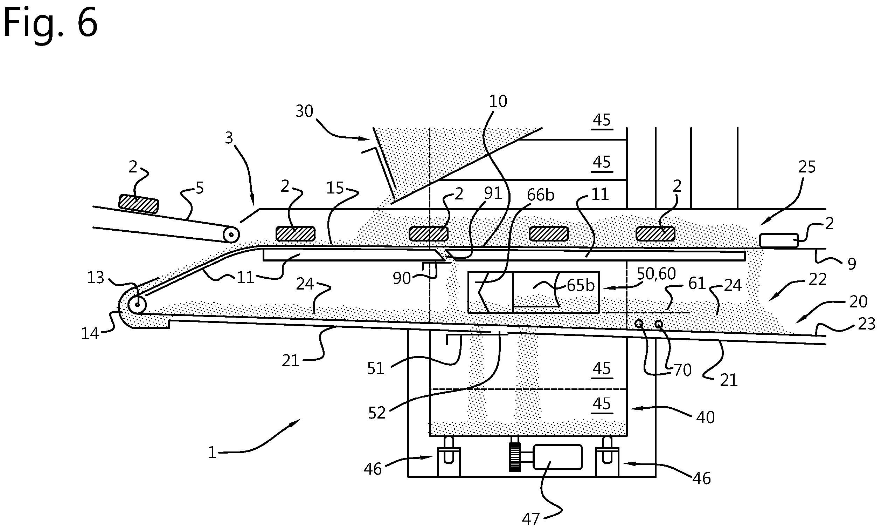

Figure 6 depicts an alternative embodiment of the machine of figure 1, having an adjustable bypass opening device 90 adapted to control one or more bypass openings 91 in the bottom coating material bed support 11. This allows to discharge an adjustable portion of the bottom coating material bed 15 passing over the one or more bypass openings 91 onto the recovered excess coating material bed 24, downstream of the elevator device fill assembly 50, so as to bypass said elevator device fill assembly 50 and be transferred to the bottom coating material bed advancing conveyor run 23. Provision of this arrangement further increases the control functionalities of the machine with respect to the composition of the coating that is passed to the one or more coating devices of the machine.

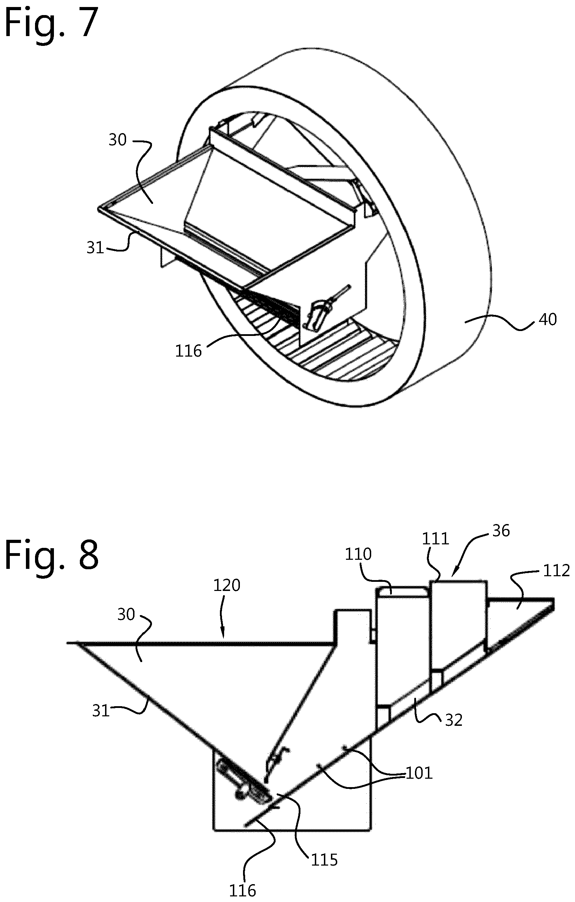

Figure 7 shows a schematic perspective view of the upper particulate coating material supply unit 30 and elevator device 40. The elevator device is an elevator wheel comprising a plurality of pockets. The wheel has an annular wheel body adapted to revolve about an axis of rotation and having a central opening. A circumferential array of pockets is mounted in the annular wheel body, the pockets being open towards the central opening of the wheel.

It is shown that both the food products conveyor assembly and the recovery conveyor each extend through the central opening of the annular wheel body of the elevator wheel, the recovery conveyor run below the food products conveyor assembly. The elevator wheel passes below the elevator device fill assembly allowing excess material to be gravity fed into the pockets.

A part of the upper particulate coating material supply unit 30 is mounted under the release location of the elevator wheel 40.

At the exit of the upper particulate coating material supply unit a sieve plate 116 has been mounted to control the larger and finer fraction of particulate coating material exiting the upper particulate coating material supply unit.

Figures 8, 9 and 17 show a schematic view of the upper particulate coating material supply unit 30.

In order to supply fresh, unused, particulate coating material to the unit 30, the unit comprises a fill chute 120 extending outside of the elevator wheel 40.

In order to deposit recovered particulate coating material to the unit 30, the unit 30 has the upper fill opening 36 for filling the upper particulate coating material supply unit with particulate coating material.

In order to supply particulate coating material onto the food products conveyor, the unit 30 has a lower particulate coating material supply opening 115..

The collected particulate coating material in the unit 30, generally embodied here as hopper, slides down along inclined bottom wall or ramp 32. To facilitate flow of the coating material, e.g. to avoid bridging, and/or to counter segregation of fractions, one or more agitator members, e.g. rods 101, may be mounted in the unit, e.g. along the inclined bottom wall.

As preferred and shown, a partition wall in the unit 30 generally separates the unit into a part that receives the fresh coating material and a part that receives the recovered coating material. The two streams of coating material are combined just upstream of the opening 115.

The upper particulate coating material supply unit 30 is provided with two transversely inclined slide plates 110, 111, as well as a third slide plate112.. These slide plates 110, 11, 112 are mounted in a deposit area where recovered particulate coating material released from the pockets of the revolving wheel 40 is deposited, dropped, onto them.

It is illustrated that at least the first and second slide plates 110,111, here also the third slide plate 112, are offset from one another, when seen in the direction of food product transportation of the machine. One may also define that as the slide plates 110, 111 being offset from one another seen in direction of the width of the pockets of the elevator wheel 40.

It is illustrated that the first and second slide plates 110, 111, are each mounted at an inclination. It is also illustrated that the direction of inclination of the first slide plate 110 is opposite to the direction of inclination of the second slide plate 111, such that particulate coating material that is deposited by the elevator device and drops onto the first slide plate 110 at a first lateral side of the unit 30 slides over the plate 110 down towards an opposite second lateral side and particulate coating material that is dropped onto the second slide plate 111 at the second lateral side of the unit 30 slides down towards the opposite first lateral side

It is illustrated that the first and second slide plates 110, 111, are each mounted perpendicular to the food transport direction.

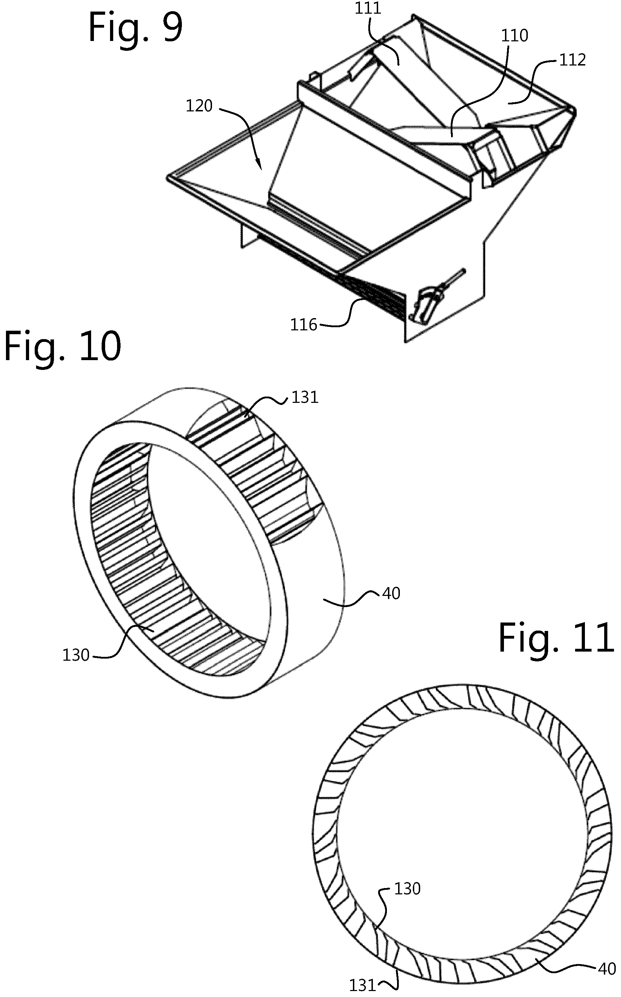

In case the elevator wheel 40 rotates clockwise, when seen in the food product transport direction, the larger fraction of the coating material has a larger momentum when released from the elevator wheel. Therefore the larger fraction will fly further and land more on the right lateral side of the supply unit 30, i.e. the higher side of the first slide plate 110 (see figure 9) and the lower side of the second slide plate 111. The smaller fraction will analogously land more on the left hand side of the supply unit, i.e. the higher side of the second slide plate 111 and the lower side of the first slide plate 110. Under the influence of gravitational forces the particles will slide down from the higher side of each of the slide plates towards the lower side thereof.

The slide plates 110, 111 may have a planar top face, as shown here. The planar top face may have an inclination only in transverse direction, also as shown here. Other slide plates designs are also envisaged, e.g. the planar top face being also, e.g. lightly, inclined in transport direction of the machine and/or the top face being non-planar, e.g. with a curvature, etc.

The third, optional, slide plate 112 of the unit, arranged behind the first and second slide plates 110, 111 when seen in transport direction of the machine, will receive particles from both the left hand side as well as the right hand side and guide the received particles down towards the center line of the supply unit.

Figures 10 and 11 show a schematic view of a first alternative of the elevator device. In this example the elevator wheel 40 comprises a plurality of pockets. These pockets are in a circumferential array in the wheel 40. The pockets are defined by bend plates which are welded in the structure of the elevator wheel.

As shown in the illustrative cut out of figure 10, the connecting edge 131 where the pocket is welded to the annular wheel body of the elevator wheel 40 is bend such that no acute angles occur after welding for food safety and hygienic reasons. The plate is further bend in a carrying portion in the middle and a release portion at its free end where the particulate coating material enters and leaves the pockets. This example comprises five different pocket configurations in two groups of four configurations alternating each other over the circumference of the elevator wheel 40. The distance between the end plate edges is distributed in an equidistance fashion while the mounting locations are not equidistant due to the variations in the angle and shapes of the pockets.

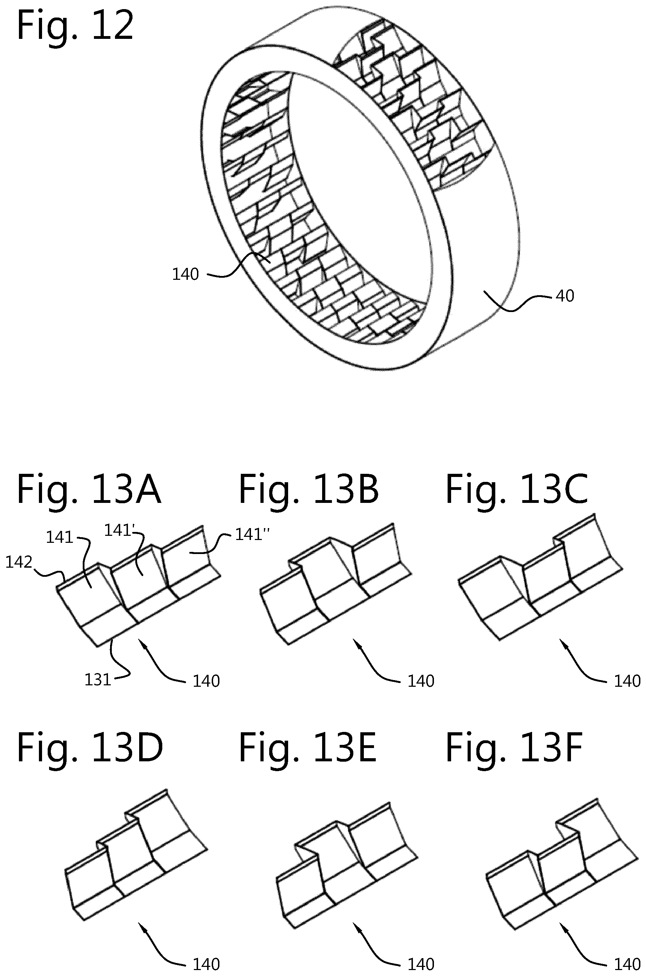

Fig. 12 shows a schematic perspective view with a partial cut out of a second alternative of the elevator device. This alternative is similar to the example of figures 10 and 11, but each plate that defines the pocket and determines the pocket configuration is now shaped in multiple, here three, discrete transitions 141, 141', 141" as shown in figures 13 a-f. As preferred, these transitions of each pocket are located synchronized or aligned with the slide plates 110,111, 112, i.e. each region of the pocket plates is aligned with one of the slide plates 110, 111, 112 in the upper supply unit 30. Due to the different angles of the discrete shapes result in a variety of release timings when the elevator wheel is in its upper angular position.

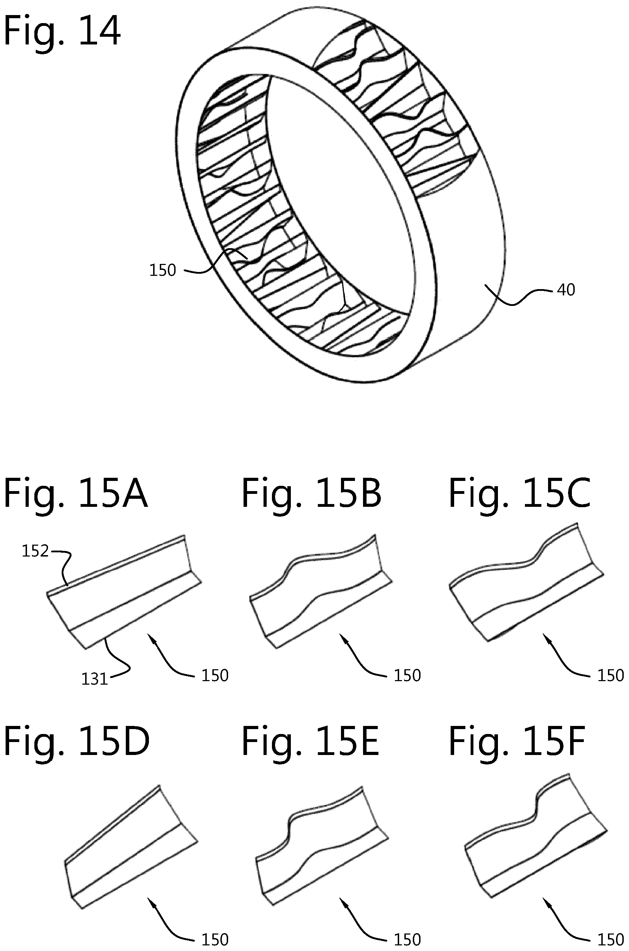

Fig. 14 shows a schematic perspective view with a partial cut out of a second alternative of the elevator device. This alternative is similar to the example of figures 10 and 11, but each plate that defines the pocket and determines the pocket configuration is now shaped such that the shape and/or angle varies in a continuously fluctuating shape with a fluctuating deposit timing of particulate coating material into the upper fill opening for filling the upper particulate coating material supply unit as shown in figures 15 a-f. Due to the different angles of the shape this results in a variety of release timings over the width of the pocket when the elevator wheel is in its upper angular position.

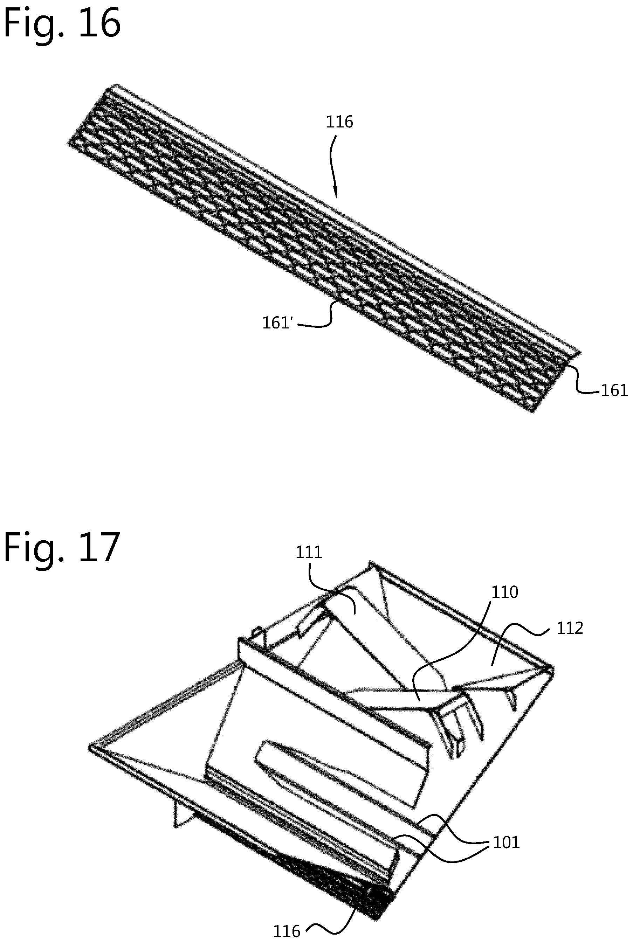

Fig. 16 shows a schematic perspective view of a holed sieve plate. A holed sieve plate 116 is mounted at the lower particulate coating material supply opening, wherein the sieve plate comprises lateral lines of holes and wherein the hole size of the holes increase from smallest 161 at the supply opening to larger 161'at the distal end of the sieve plate. In particular in applications where food products need to be coated with a large variety of coating sizes, such as cornflake crumbs and smaller crumbs, it is important that the larger crumbs are adhered to the product first, before the smaller crumbs fill up the remaining holes. In case smaller crumbs adhere to the product first, the chance increases that larger flakes or crumbs do not adhere to the food product, which may result in a loose coating, which may result in a less optimal end product, and/or in case the product is e.g. deep fried, it may result in releasing the larger coating material in the frying oil, which results in oil filtering issues and potentially health issues due to the reduction of the quality of the oil. Therefore, the sieve plate keeps the larger fraction of the coating material on the sieve plate while the smaller particles pass through the plate. Because the food products are conveyed from the distal end (with the largest holes) towards the supply exit side (with the smallest holes), the larger flakes or coarse crumbs will adhere first before the vacancies are filled with the smaller crumbs.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure, as defined in the claims. In particular, features presented and described in separate dependent claims may be applied in combination and any advantageous combination of such claims as far as not explicitly excluded in the claims.

Further, the terms and phrases used herein are not intended to be limiting; but rather, to provide an understandable description of the invention. The terms "a" or "an", as used herein, are defined as one or more than one. The term plurality, as used herein, is defined as two or more than two. A plurality may also indicate a subset of two or more, out of a larger multitude of items. The term another, as used herein, is defined as at least a second or more. The terms including and/or having, as used herein, are defined as comprising (i.e., open language). The term coupled, as used herein, is defined as connected, although not necessarily directly.

Elements and aspects discussed for or in relation with a particular embodiment may be suitably combined with elements and aspects of other embodiments, unless explicitly stated otherwise. The invention being thus described, it will be obvious that the same may be varied in many ways. Such variations are not to be regarded as a departure from the invention, and all such modifications as would be obvious to one skilled in the art are intended to be included within the scope of the following claims.

## Claims

1. Coating machine adapted to coat food products with a particulate coating material, the machine comprising:
- a food products conveyor assembly adapted to receive food products to be coated at an inlet of the machine and to discharge coated food products at an outlet of the machine in a food product transport direction,
- a coating device arranged between the inlet and the outlet of the machine and adapted to be supplied with particulate coating material and to subject the food products to a coating treatment wherein some of the particulate coating material adheres to the food products, which coating device comprises:
- an upper particulate coating material supply unit (30) mounted above the food products conveyor assembly, wherein the upper particulate coating material supply unit comprises an upper fill opening for filling the upper particulate coating material supply unit with particulate coating material and a lower particulate coating material supply opening to supply particulate coating material onto the food products conveyor assembly,
- an excess coating material separation station configured to cause excess coating material to be separated from said coated food products in order to recover said excess coating material for re-use,
- an excess coating material recovery conveyor comprising:
- a recovered excess coating material bed support adapted to receive thereon at a reception location said recovered excess coating material from said separation station to form a recovered excess coating material bed of said separated excess coating material on said recovered excess coating material bed support,
- a recovery conveyor run above said recovered excess coating material bed support and movable relative to said bed support and configured to convey said excess coating material bed over said recovered excess coating material bed support,
- a particulate coating material elevator device (40) comprising a plurality of pockets adapted to receive a portion of said excess coating material from said recovery conveyor and to supply said excess coating material to the upper particulate coating material supply unit for re-use of the particulate coating material,
**characterized in that**
the upper particulate coating material supply unit comprises a first slide plate (110) and a second slide plate (111), wherein the first and second slide plates are each mounted at an inclination and wherein the direction of inclination of the first slide plate is opposite to the direction of inclination of the second slide plate, such that particulate coating material that is deposited by the elevator device (40) onto the first slide plate at a first lateral side of the upper particulate coating material supply unit slides down towards an opposite second lateral side and particulate coating material that is dropped onto the second slide plate at the second lateral side of the upper particulate coating material supply unit slides down towards the opposite first lateral side, for example wherein the first and second slide plates (110,111) are arranged offset from one another seen in the food product transport direction.

2. Coating machine according to claim 1, wherein the plurality of pockets of the elevator device are configured in a variety of pocket configurations, the pocket configuration being defined by at least the shape and/or angle of the pocket with respect to the elevator device, wherein each of the variety of pocket configurations initiates the release of particulate coating material at a different lateral location above the first and second slide plates.

3. Coating machine according to claim 2, wherein the particulate coating material elevator device comprises at least three different pocket configurations.

4. Coating machine according to claim 3, wherein the particulate coating material elevator device comprises at least two alternating unique groups of pocket configurations, wherein each group of pocket configurations comprises at least five, preferably eight pocket configurations.

5. Coating machine according to any one of preceding claims, wherein a pocket configuration as defined by at least the shape and/or angle varies over a width of the pocket such that the timing of the depositing of particulate coating material into the upper particulate coating material supply unit varies in the food product transport direction.

6. Coating machine according to claim 5, wherein the pocket configuration as defined by at least the shape and/or angle varies over the width of the pocket in at least two, preferably three discrete lateral regions of the pocket, wherein each subsequent lateral portion of the pocket is configured to have a different timing of the depositing of particulate coating material into the upper particulate coating material supply unit than a neighbouring lateral region.

7. Coating machine according to claim 5, wherein the pocket configuration as defined by at least the shape and/or angle varies in a continuously fluctuating shape with a fluctuating deposit timing of particulate coating material into the upper fill opening for filling the upper particulate coating material supply unit.

8. Coating machine according to any one of preceding claims, wherein the upper particulate coating material supply unit comprises a further third slide plate that is configured to receive particulate coating material substantially from the whole lateral width of the upper particulate coating material supply unit and to have the received particulate coating material slide towards the center of the upper particulate coating material supply unit.

9. Coating machine according to any one of preceding claims, wherein the pockets are configured such that particulate coating material is deposited onto all slide plates of the upper particulate coating material supply unit.

10. Coating machine according to any one of preceding claims, wherein the upper particulate coating material supply unit comprises a ramp to guide the particulate coating material towards the lower particulate coating material supply opening, and wherein an agitator is mounted adjacent the ramp such that the particulate coating material that is in operation guided towards the supply opening is agitated.

11. Coating machine according to any one of preceding claims, wherein a holed sieve plate is mounted at the lower particulate coating material supply opening, wherein the sieve plate comprises lateral lines of holes, and wherein the hole size of the holes increase from smallest at the supply opening to larger at the distal end of the sieve plate.

12. Coating machine according to any one of preceding claims, wherein the pockets are configured in a substantially perpendicular fashion in the particulate coating material elevator device.

13. Coating machine according to any one of preceding claims, wherein the distance between inflow openings of the pockets are distributed in a substantially equidistant fashion.

14. Coating machine according to any one of preceding claims, wherein the supply direction of particulate coating material at the lower particulate coating material supply opening is opposite the food product transport direction.

15. Coating machine according to any one of preceding claims, wherein the upper particulate coating material supply unit further comprises a fill chute for supplying fresh particulate coating material which is combined with the recovered excess coating material before supplying the coating material to the food product.

16. Method for coating a food product in a coating machine according to any one of claims 1 - 15, **characterized in that** the re-use particulate coating material is partially collected in the elevator device, which elevates it towards the upper fill opening for filling the upper particulate coating material supply unit, and wherein the pockets are configured such that the particulate coating material is deposited onto the slide plates and subsequently supplied to the food products on the food product conveyor assembly.

## Patentansprüche

1. Beschichtungsmaschine, die dazu eingerichtet ist, Lebensmittelprodukte mit einem Partikelbeschichtungsmaterial zu beschichten, wobei die Maschine Folgendes umfasst:
- eine Lebensmittelproduktförderanordnung, die dazu eingerichtet ist, zu beschichtende Lebensmittelprodukte an einem Einlass der Maschine aufzunehmen und beschichtete Lebensmittelprodukte an einem Auslass der Maschine in eine Lebensmittelprodukttransportrichtung abzugeben,
- eine Beschichtungsvorrichtung, die zwischen dem Einlass und dem Auslass der Maschine angeordnet und dazu eingerichtet ist, mit Partikelbeschichtungsmaterial zuführt zu werden und die Lebensmittelprodukte einer Beschichtungsbehandlung zu unterziehen, wobei ein Teil des Partikelbeschichtungsmaterials an den Lebensmittelprodukten haftet, wobei die Beschichtungsvorrichtung Folgendes umfasst:
- eine obere Partikelbeschichtungsmaterialzuführungseinheit (30), die über der Lebensmittelproduktförderanordnung montiert ist, wobei die obere Partikelbeschichtungsmaterialzuführungseinheit eine obere Füllöffnung zum Füllen der oberen Partikelbeschichtungsmaterialzuführungseinheit mit einem Partikelbeschichtungsmaterial und eine untere Partikelbeschichtungsmaterialzuführungsöffnung zum Zuführen des Partikelbeschichtungsmaterials auf die Lebensmittelproduktförderanordnung umfasst,
- eine Beschichtungsmaterialüberschussabscheidestation, die dazu ausgelegt ist, Beschichtungsmaterialüberschuss von den beschichteten Lebensmittelprodukten abzuscheiden, um den Beschichtungsmaterialüberschuss zur Wiederverwendung zurückzugewinnen,
- einen Beschichtungsmaterialüberschussrückgewinnungsförderer, umfassend:
- eine Bettstütze für zurückgewonnenen Beschichtungsmaterialüberschuss, die dazu eingerichtet ist, darauf an einer Aufnahmestelle den zurückgewonnenen Beschichtungsmaterialüberschuss von der Abscheidestation aufzunehmen, um ein Bett für zurückgewonnenen Beschichtungsmaterialüberschuss des abgeschiedenen Beschichtungsmaterialüberschusses auf der Bettstütze für zurückgewonnenen Beschichtungsmaterialüberschuss auszubilden,
- einen Rückgewinnungsförderer, der über der Bettstütze für zurückgewonnenen Beschichtungsmaterialüberschuss verläuft und in Bezug zur Bettstütze beweglich und dazu ausgelegt ist, das Beschichtungsmaterialüberschussbett über die Bettstütze des zurückgewonnenen Beschichtungsmaterialüberschusses zu befördern,
- eine Partikelbeschichtungsmaterialaufzugvorrichtung (40), die mehrere Taschen umfasst, die dazu eingerichtet sind, einen Teil des Beschichtungsmaterialüberschusses von dem Rückgewinnungsförderer aufzunehmen und den Beschichtungsmaterialüberschuss zur oberen Partikelbeschichtungsmaterialzuführungseinheit zur Wiederverwendung des Partikelbeschichtungsmaterials zuzuführen,
**dadurch gekennzeichnet, dass**
die obere Partikelbeschichtungsmaterialzuführungseinheit eine erste Rutschplatte (110) und eine zweite Rutschplatte (111) umfasst, wobei die erste und zweite Rutschplatte jeweils geneigt montiert sind und wobei die Neigungsrichtung der ersten Rutschplatte der Neigungsrichtung der zweiten Rutschplatte entgegengesetzt ist, sodass von der Aufzugvorrichtung (40) auf die erste Rutschplatte an einer ersten lateralen Seite der oberen Partikelbeschichtungsmaterialzuführungseinheit abgelagertes Partikelbeschichtungsmaterial nach unten zu einer entgegengesetzten zweiten lateralen Seite rutscht und auf die zweite Rutschplatte an der zweiten lateralen Seite der oberen Partikelbeschichtungsmaterialzuführungseinheit abgeworfenes Partikelbeschichtungsmaterial nach unten zu entgegengesetzten ersten lateralen Seite rutscht, zum Beispiel wobei die erste und zweite Rutschplatte (110, 111) in Lebensmittelprodukttransportrichtung voneinander versetzt angeordnet sind.

2. Beschichtungsmaschine nach Anspruch 1, wobei die mehreren Taschen der Aufzugvorrichtung in einer Vielfalt von Taschenkonfigurationen ausgelegt sind, wobei die Taschenkonfiguration zumindest durch die Form und/oder den Winkel der Tasche in Bezug zur Aufzugvorrichtung definiert ist, wobei jede der Vielfalt von Taschenkonfigurationen das Freisetzen von Partikelbeschichtungsmaterial an einer anderen lateralen Position über der ersten und zweiten Rutschplatte einleitet.

3. Beschichtungsmaschine nach Anspruch 2, wobei die Partikelbeschichtungsmaterialaufzugvorrichtung mindestens drei verschiedene Taschenkonfigurationen umfasst.

4. Beschichtungsmaschine nach Anspruch 3, wobei die Partikelbeschichtungsmaterialaufzugvorrichtung mindestens zwei abwechselnde, einzigartige Gruppen von Taschenkonfiguration umfasst, wobei jede Gruppe von Taschenkonfigurationen mindestens fünf, vorzugsweise acht Taschenkonfigurationen umfasst.

5. Beschichtungsmaschine nach einem der vorstehenden Ansprüche, wobei eine Taschenkonfiguration, die zumindest durch die Form und/oder den Winkel definiert ist, über eine Breite der Tasche variiert, sodass das Timing der Ablagerung von Partikelbeschichtungsmaterial in der oberen Partikelbeschichtungsmaterialzuführungseinheit in Lebensmittelprodukttransportrichtung variiert.

6. Beschichtungsmaschine nach Anspruch 5, wobei die Taschenkonfiguration, die zumindest durch die Form und/oder den Winkel definiert ist, über die Breite der Tasche an mindestens zwei, vorzugsweise drei einzelnen lateralen Stellen der Tasche variiert, wobei jeder nachfolgende laterale Abschnitt der Tasche dazu ausgelegt ist, ein anderes Timing der Ablagerung von Partikelbeschichtungsmaterial in der oberen Partikelbeschichtungsmaterialzuführungseinheit als ein benachbarter lateraler Bereich aufzuweisen.

7. Beschichtungsmaschine nach Anspruch 5, wobei die Taschenkonfiguration, die zumindest durch die Form und/oder den Winkel definiert ist, in einer durchgehend fluktuierenden Form mit einem fluktuierenden Ablagerungstiming von Partikelbeschichtungsmaterial in der oberen Füllöffnung zum Füllen der oberen Partikelbeschichtungsmaterialzuführungseinheit variiert.

8. Beschichtungsmaschine nach einem der vorstehenden Ansprüche, wobei die obere Partikelbeschichtungsmaterialzuführungseinheit ferner eine dritte Rutschplatte umfasst, die dazu ausgelegt ist, Partikelbeschichtungsmaterial im Wesentlichen von der gesamten lateralen Breite der oberen Partikelbeschichtungsmaterialzuführungseinheit aufzunehmen und wobei das aufgenommene Partikelbeschichtungsmaterial zur Mitte der oberen Partikelbeschichtungsmaterialzuführungseinheit rutscht.

9. Beschichtungsmaschine nach einem der vorstehenden Ansprüche, wobei die Taschen derart ausgelegt sind, dass Partikelbeschichtungsmaterial auf allen Rutschplatten der oberen Partikelbeschichtungsmaterialzuführungseinheit abgelagert wird.

10. Beschichtungsmaschine nach einem der vorstehenden Ansprüche, wobei die obere Partikelbeschichtungsmaterialzuführungseinheit eine Rampe umfasst, um das Partikelbeschichtungsmaterial zur unteren Partikelbeschichtungsmaterialzuführungsöffnung zu leiten, und wobei ein Rührwerk an die Rampe angrenzend montiert ist, sodass das Partikelbeschichtungsmaterial, das im Betrieb zur Zuführungsöffnung geleitet wird, umgerührt wird.

11. Beschichtungsmaschine nach einem der vorstehenden Ansprüche, wobei eine Lochsiebplatte an der unteren Partikelbeschichtungsmaterialzuführungsöffnung montiert ist, wobei die Siebplatte laterale Lochlinien umfasst und wobei die Lochgröße der Löcher von der kleinsten an der Zuführungsöffnung zu größeren am distalen Ende der Siebplatte zunimmt.

12. Beschichtungsmaschine nach einem der vorstehenden Ansprüche, wobei die Taschen im Wesentlichen senkrecht in der Partikelbeschichtungsmaterialaufzugvorrichtung ausgelegt sind.

13. Beschichtungsmaschine nach einem der vorstehenden Ansprüche, wobei der Abstand zwischen den Zuflussöffnungen der Taschen im Wesentlichen gleichmäßig verteilt ist.

14. Beschichtungsmaschine nach einem der vorstehenden Ansprüche, wobei die Zuführungsrichtung von Partikelbeschichtungsmaterial an der unteren Partikelbeschichtungsmaterialzuführungsöffnung der Lebensmittelprodukttransportrichtung entgegengesetzt ist.

15. Beschichtungsmaschine nach einem der vorstehenden Ansprüche, wobei die obere Partikelbeschichtungsmaterialzuführungseinheit ferner eine Füllschütte zum Zuführen von frischem Partikelbeschichtungsmaterial umfasst, das mit dem zurückgewonnenen Beschichtungsmaterialüberschuss kombiniert wird, bevor das Beschichtungsmaterial dem Lebensmittelprodukt zugeführt wird.

16. Verfahren zum Beschichten eines Lebensmittelprodukts in einer Beschichtungsmaschine nach einem der Ansprüche 1-15, **dadurch gekennzeichnet, dass** das wiederverwendbare Partikelbeschichtungsmaterial teilweise von der Aufzugvorrichtung aufgefangen wird, welche dieses zur oberen Füllöffnung angebt, um die obere Partikelbeschichtungsmaterialzuführungseinheit zu füllen, und wobei die Taschen derart ausgelegt sind, dass das Partikelbeschichtungsmaterial auf den Rutschplatten abgelagert und anschließend den Lebensmittelprodukten auf der Lebensmittelproduktförderanordnung zugeführt wird.

## Revendications

1. Machine d'enrobage adaptée pour enrober des produits alimentaires avec un matériau d'enrobage particulaire, la machine comprenant :
- un ensemble de transport de produits alimentaires adapté pour recevoir des produits alimentaires à enrober à une entrée de la machine et pour débiter des produits alimentaires enrobés à une sortie de la machine dans un sens de transport des produits alimentaires,
- un dispositif d'enrobage disposé entre l'entrée et la sortie de la machine et adapté pour être alimenté en matériau d'enrobage particulaire et pour soumettre les produits alimentaires à un traitement d'enrobage dans lequel du matériau d'enrobage particulaire adhère aux produits alimentaires, ledit dispositif d'enrobage comprenant :
- une unité supérieure de distribution de matériau d'enrobage particulaire (30) montée au-dessus de l'ensemble de transport de produits alimentaires, l'unité supérieure de distribution de matériau d'enrobage particulaire comprenant une ouverture supérieure de remplissage pour remplir l'unité supérieure de distribution de matériau d'enrobage particulaire avec un matériau d'enrobage particulaire et une ouverture inférieure de distribution de matériau d'enrobage particulaire pour distribuer du matériau d'enrobage particulaire sur l'ensemble de transport de produits alimentaires,
- un poste de séparation de matériau d'enrobage excédentaire configuré pour séparer du matériau d'enrobage excédentaire desdits produits alimentaires enrobés afin de récupérer ledit matériau d'enrobage excédentaire en vue d'une réutilisation,
- un transporteur de récupération de matériau d'enrobage excédentaire comprenant :
- un support de lit de matériau d'enrobage excédentaire récupéré adapté pour recevoir sur celui-ci, à un emplacement de réception, ledit matériau d'enrobage excédentaire récupéré provenant dudit poste de séparation afin de former un lit de matériau d'enrobage excédentaire récupéré dudit matériau d'enrobage excédentaire séparé sur ledit support de lit de matériau d'enrobage excédentaire récupéré,
- un brin de transporteur de récupération au-dessus dudit support de lit de matériau d'enrobage excédentaire récupéré et mobile par rapport audit support de lit et configuré pour acheminer ledit lit de matériau d'enrobage excédentaire sur ledit support de lit de matériau d'enrobage excédentaire récupéré,
- un dispositif élévateur de matériau d'enrobage particulaire (40) comprenant une pluralité de poches conçues pour recevoir une partie dudit matériau d'enrobage excédentaire provenant dudit transporteur de récupération et pour fournir ledit matériau d'enrobage excédentaire à l'unité supérieure de distribution de matériau d'enrobage particulaire en vue de la réutilisation du matériau d'enrobage particulaire,
**caractérisée en ce que**
l'unité supérieure de distribution de matériau d'enrobage particulaire comprend une première glissière (110) et une deuxième glissière (111), les première et deuxième glissières étant chacune montées inclinées et la direction d'inclinaison de la première glissière étant opposée à la direction d'inclinaison de la deuxième glissière, de sorte que le matériau d'enrobage particulaire déposé par le dispositif élévateur (40) sur la première glissière au niveau d'un premier côté latéral de l'unité supérieure de distribution de matériau d'enrobage particulaire glisse vers le bas vers un second côté latéral opposé et que le matériau d'enrobage particulaire qui est déposé sur la deuxième glissière au niveau du second côté latéral de l'unité supérieure de distribution de matériau d'enrobage particulaire glisse vers le bas vers le premier côté latéral opposé, les première et deuxième glissières (110, 111) étant, par exemple, disposées de manière décalée l'une par rapport à l'autre en regardant dans le sens de transport des produits alimentaires.

2. Machine d'enrobage selon la revendication 1, dans laquelle la pluralité de poches du dispositif élévateur sont configurées avec une variété de configurations de poches, la configuration de poche étant définie par au moins la forme et/ou l'angle de la poche par rapport au dispositif élévateur, dans laquelle chacune de la variété de configurations de poches commence à libérer du matériau d'enrobage particulaire à un emplacement latéral différent au-dessus des première et seconde glissières.

3. Machine d'enrobage selon la revendication 2, dans laquelle le dispositif élévateur de matériau d'enrobage particulaire comprend au moins trois configurations de poches différentes.

4. Machine d'enrobage selon la revendication 3, dans laquelle le dispositif élévateur de matériau d'enrobage particulaire comprend au moins deux groupes uniques alternés de configurations de poches, dans laquelle chaque groupe de configurations de poches comprend au moins cinq, de préférence huit configurations de poches.

5. Machine d'enrobage selon l'une quelconque des revendications précédentes, dans laquelle une configuration de poche telle que définie par au moins la forme et/ou l'angle varie sur une largeur de la poche de telle sorte que le moment du dépôt du matériau d'enrobage particulaire dans l'unité supérieure de distribution de matériau d'enrobage particulaire varie dans le sens de transport des produits alimentaires.

6. Machine d'enrobage selon la revendication **5,** dans laquelle la configuration de poche telle que définie par au moins la forme et/ou l'angle varie sur la largeur de la poche dans au moins deux, de préférence trois zones latérales distinctes de la poche, dans laquelle chaque partie latérale suivante de la poche est configurée pour avoir un moment différent de dépôt du matériau d'enrobage particulaire dans l'unité supérieure de distribution de matériau d'enrobage particulaire relativement à une zone latérale voisine.

7. Machine d'enrobage selon la revendication 5, dans laquelle la configuration de poche telle que définie par au moins la forme et/ou l'angle varie en une forme continuellement fluctuante avec un moment fluctuant de dépôt de matériau d'enrobage particulaire dans l'ouverture supérieure de remplissage pour remplir l'unité supérieure de distribution de matériau d'enrobage particulaire.

8. Machine d'enrobage selon l'une quelconque des revendications précédentes, dans laquelle l'unité supérieure de distribution de matériau d'enrobage particulaire comprend une troisième glissière supplémentaire qui est configurée pour recevoir le matériau d'enrobage particulaire sensiblement à partir de toute la largeur latérale de l'unité supérieure de distribution de matériau d'enrobage particulaire et pour faire glisser le matériau d'enrobage particulaire reçu vers le centre de l'unité supérieure de distribution de matériau d'enrobage particulaire.

9. Machine d'enrobage selon l'une quelconque des revendications précédentes, dans laquelle les poches sont configurées de telle sorte que le matériau d'enrobage particulaire est déposé sur toutes les glissières de l'unité supérieure de distribution de matériau d'enrobage particulaire.

10. Machine d'enrobage selon l'une quelconque des revendications précédentes, dans laquelle l'unité supérieure de distribution de matériau d'enrobage particulaire comprend une rampe pour guider le matériau d'enrobage particulaire vers l'ouverture inférieure de distribution de matériau d'enrobage particulaire, et dans laquelle un agitateur est monté adjacent à la rampe de sorte que le matériau d'enrobage particulaire qui est guidé en fonctionnement vers l'ouverture de distribution est agité.

11. Machine d'enrobage selon l'une quelconque des revendications précédentes, dans laquelle une plaque perforée de tamisage est montée au niveau de l'ouverture inférieure de distribution de matériau d'enrobage particulaire, dans laquelle la plaque de tamisage comprend des lignes latérales de trous, et dans laquelle la taille des trous augmente du plus petit au niveau de l'ouverture de distribution au plus grand au niveau de l'extrémité distale de la plaque de tamisage.

12. Machine d'enrobage selon l'une quelconque des revendications précédentes, dans laquelle les poches sont configurées d'une manière sensiblement perpendiculaire dans le dispositif élévateur de matériau d'enrobage particulaire.

13. Machine d'enrobage selon l'une quelconque des revendications précédentes, dans laquelle les ouvertures d'entrée des poches sont réparties de manière sensiblement équidistante.

14. Machine d'enrobage selon l'une quelconque des revendications précédentes, dans laquelle la direction de distribution du matériau d'enrobage particulaire au niveau de l'ouverture inférieure de distribution de matériau d'enrobage particulaire est opposée au sens de transport des produits alimentaires.

15. Machine d'enrobage selon l'une quelconque des revendications précédentes, dans laquelle l'unité supérieure de distribution de matériau d'enrobage particulaire comprend en outre une goulotte de remplissage pour distribuer du matériau d'enrobage particulaire frais qui est combiné avec le matériau d'enrobage excédentaire récupéré avant de distribuer le matériau d'enrobage sur le produit alimentaire.

16. Procédé d'enrobage d'un produit alimentaire dans une machine d'enrobage selon l'une quelconque des revendications 1 à 15, **caractérisé en ce que** le matériau d'enrobage particulaire à réutiliser est partiellement collecté dans le dispositif élévateur, qui l'élève vers l'ouverture supérieure de remplissage pour remplir l'unité supérieure de distribution de matériau d'enrobage particulaire, et les poches étant configurées de telle sorte que le matériau d'enrobage particulaire est déposé sur les glissières et ensuite distribué sur les produits alimentaires sur l'ensemble de transport de produits alimentaires.
